# EUROPEAN PATENT APPLICATION

(11) **EP 0 698 544 A1**
(43) Date of publication of application: **28.02.1996**
(21) Application number: 95305941.7
(22) Date of filing: 24.08.1995
(51) Int. Cl.: B62D 25/24

(54) **Plugs for apertures**

(30) Priority: 25.08.1994 GB 9417165
(71) Applicant: Knorr-Bremse Systems for Commercial Vehicles Limited, Kingswood, Bristol BS15 2NL (GB)
(72) Inventor: Shaw, Edward Gilbert, Portishead, Bristol BS20 8AZ (GB)
(74) Representative: Turner, Alan Reginald

(57) **Abstract**

A moulded resilient plug for sealingly closing an aperture (7) in a wall (8) of a component comprises end regions (1,2) joined by a resilient intermediate region (3) of smaller diameter than the end regions and a blind bore (4) which extends axially through one end region and the intermediate region and permitting radial or axial deformation of the intermediate region in use to enable sealing of apertures (7) having a range of diameters in material having a range of thickness (t).

## Description

This invention relates to plugs for apertures and relates particularly to plugs of resilient material.

It is usual to manufacture housings of compressed air actuators, such as those used in compressed air braking systems, as pressed steel components. The walls of such components frequently include a plurality of apertures only selected ones of which may be used for breathing or vent connections. Therefore apertures which are not so used need to be provided with secure plugs usually conveniently of neoprene or other material to minimise ingress of foreign material.

The object of the present invention is to provide an improved plug for use in apertures of a wall of a component which provides sealing, good dependability in service and ease of insertion during assembly of the component.

According to the present invention there is provided a moulded plug for an aperture in a wall said plug comprising a first end region, a second end region and a resilient intermediate region, said intermediate region being of smaller natural external diameter than the end regions and including a blind bore extending through the second end region and the intermediate region permitting elastic deformation in use of the material of the plug.

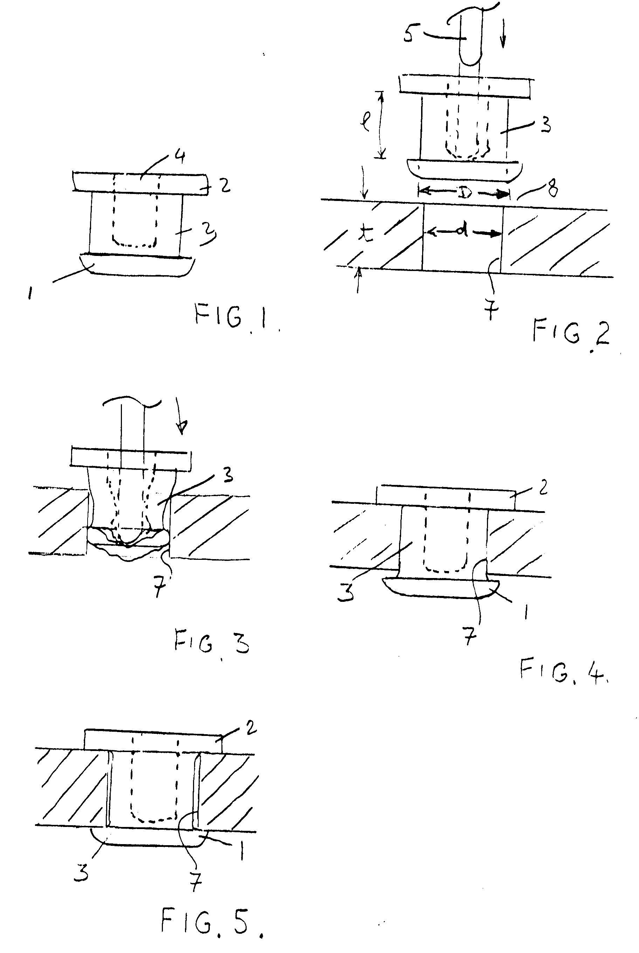

In order that the invention may be more clearly understood and readily carried into effect the same will now be further described by way of an example with reference to the accompanying drawing of which Figs. 1 to 4 illustrate a plug in accordance with the invention and stages of the assembly thereof to an aperture in a wall and Fig. 5 illustrates the plug when inserted in a wall of greater thickness.

Referring to Fig. 1, a plug which is shown in a side view comprises a neoprene moulding having a generally disc-shaped inner end region 1, a generally annular-shaped outer end region 2 and a coaxial generally cylindrically shaped intermediate region 3 joining the inner and outer end regions. The inner end region 1 is designed to be of smaller diameter, typically eight tenths of the diameter of the outer end region 2. The intermediate region 3 has a natural diameter 'D' which is smaller than the diameters of the inner and outer regions. The plug has a blind bore 4 which extends through the outer region and the intermediate region terminating in the intermediate region near the inner end region. Typically the bore diameter equates to or approximates to half the diameter 'D' and the bore length within the intermediate region equates to or approximates to seven eights of the natural axial length 1 of the intermediate region. The plug is of sufficiently resilient material and the diameter of the bore is sufficiently great to enable its inner end region to be deformed to pass through an aperture in a wall which may ideally be of slightly smaller diameter 'd' than the natural diameter 'D' of the intermediate portion.

Ordinarily a solid plug of such dimensions may not be easily deformed to be inserted in an aperture of such smaller diameter but with reference to Figs. 2 and 3, it is seen that by provision of the bore 4 and insertion of a tool such as 5 of somewhat smaller diameter into the bore 4 the plug can be conveniently located thereby and eased manually or mechanically into the aperture 7. The effect of the tool 5 and the opposing frictional force of the wall 8 is to axially downwardly stretch the intermediate region 3 causing circumferential contraction of the lower end of region 3 and resilient distortion of the inner region 1, enabling passage of region 1 through the wall as shown in Fig. 3, to reach an inserted position as shown in Fig. 4 before withdrawal of the tool 5. Since in the example of Fig. 4 the intermediate region (3) of the plug is of somewhat greater natural diameter than the aperture 7, the plug is retained with a sealing fit therein regardless of whether the inner region 1 or the outer region 2 is in contact with the respective adjacent peripheral surface surrounding the aperture 7.

However, in a case where the free material diameter 'D' of the intermediate region 3 is slightly less than the diameter 'd' of aperture 7, the plug may be a loose fit in the aperture unless there is sealing engagement of the inner and outer regions with the respective wall surfaces. This may indeed occur where the natural length (1) of the intermediate region as seen in Fig. 5 is less than the thickness (t) of the material to be plugged. In other words, in order to achieve sealing by such a plug either the natural length of the intermediate region (3) is somewhat less than the wall thickness (4) or the natural diameter 'D' of the intermediate region (3) is somewhat greater than the diameter 'd' of the aperture. In consequence and having regard to the sustainable elasticity of the material it is possible to design a single plug moulding to provide dependable sealing of a range of aperture length and diameter combinations. Typically, a plug in accordance with the invention and of 3.65mm ( ±0.15) length of its intermediate region with 6.7mm diameter ( ±0.2) may reliably be used to seal 6mm apertures in material ranging from 3mm to 5mm in thickness.

In view of the invention it is therefore now possible to provide a single plug size to cover applications where two or three plug sizes were previously required.

## Claims

**1)** A moulded plug for an aperture (7) in a wall said plug comprising a first end region, a second end region and a resilient intermediate region, said intermediate region (3) being of smaller natural external diameter than the end regions (1,2) and including a blind bore (4) extending through the second end region (2) and the intermediate region (3) permitting elastic deformation in use of the material of the plug.

**2)** A moulded plug as claimed in claim 1 characterised in that said blind bore (4) extends to or approximates to seven eights of the axial length of said intermediate region (3).

**3)** A moulded plug as claimed in claim 1 or 2 characterised in that said blind bore (4) has a diameter equal to or approximating to half the natural diameter of said intermediate region (3).

**4)** A moulded plug as claimed in claim 1, 2 or 3 characterised in that said second end region (2) is of greater diameter than said first end region (1).

**5)** A moulded plug substantially as described herein with reference to Figs. 1 and 2, 4 or 5 of the accompanying drawings.
